# FASCICULE DE BREVET EUROPEEN

(11) **EP 1 355 454 B1**
(45) Date de publication et mention de la délivrance du brevet: **06.02.2008**
(21) Numéro de dépôt: 03290968.1
(22) Date de dépôt: 18.04.2003
(51) Int. Cl.: H04L 12/56

(54) **Dispositif de routage à traitement parallèle**
Routinggerät mit paralleler Verarbeitung
Parallel processing routing device

(30) Priorité: 19.04.2002 FR 0204931
(43) Date de publication de la demande: 22.10.2003
(73) Titulaire: Alcatel Lucent, 75008 Paris (FR)
(72) Inventeur: Lespagnol, Albert, 78210 St. Cyr l'Ecole (FR)
(74) Mandataire: El Manouni, Josiane

(56) Documents cités:
- EP-A- 0 849 973
- WO-A-01/69849
- US-A- 5 905 725

## Description

L'invention concerne le domaine de l'aiguillage de paquets de données au sein d'un réseau, et plus particulièrement les dispositifs assurant au moins la fonction de routage (voir par exemple le document US-A-5 905 725).

On entend ici par « routage », la fonction d'acheminement de paquets de données dans un réseau (niveau 3 du modèle OSI). Il correspond au terme anglais « routing ».

Le routage est une fonction essentielle à la transmission de données dans les réseaux. Il consiste en effet à déterminer en chaque noeud d'un réseau, à l'aide d'une table de routage, le noeud suivant qui permettra d'optimiser la transmission d'un paquet de données entre sa source et sa destination. Sa mise en oeuvre s'effectue soit à l'aide de routeurs (ou « router »), de type L3F (pour « Level 3 Forwarding »), soit à l'aide de dispositifs d'aiguillage « mixtes » (« switch-router ») qui assurent à la fois la commutation et le routage.

En raison de l'évolution permanente des réseaux, notamment publics, il est indispensable de rafraîchir fréquemment les tables de routage, typiquement toutes les cinq secondes. Ces rafraîchissements nécessitent l'échange de volumes importants de données, typiquement plusieurs mégabits, ce qui limite notablement les performances du dispositif de routage ou d'aiguillage. De plus, l'architecture distribuée des dispositifs de routage ou d'aiguillage actuels s'avère de moins en moins adaptée aux trafics qui ne cessent d'augmenter au sein des réseaux.

L'invention a donc pour but de remédier à tout ou partie des inconvénients précités.

Elle propose à cet effet un dispositif de routage de données comprenant, d'une part, un module de gestion pouvant recevoir des données primaires de routage et l'adresse de stockage de données secondaires à router, associées aux données primaires, et d'autre part, un module de transfert pour déterminer, à partir de ces données reçues et de données stockées dans au moins une table de routage, des données tertiaires désignant l'un au moins des ports de sortie d'un étage de transport de données et de nouvelles données primaires de routage, et pour délivrer à l'étage de transport les données primaires et tertiaires déterminées, de sorte que certaines au moins des nouvelles données primaires soient combinées aux données secondaires à router stockées à l'adresse de stockage, puis transmises sur chaque port de sortie désigné par les données tertiaires.

On entend ici par étage de transport de données, un étage constitué, notamment, d'un sous-étage d'entrée (ou « ingress stage ») muni de ports d'entrée pour recevoir les paquets de données, d'une mémoire tampon pour stocker temporairement les données à router à une adresse des stockage, et d'un sous-étage de sortie (ou « egress stage ») muni de ports de sortie pour transmettre les données routées.

Ce dispositif se caractérise par le fait que :
- son module de gestion comprend une mémoire tampon subdivisée en n sous-mémoires propres à stocker chacune, à des adresses choisies, les portions de segments de paquets de données reçus, et à délivrer simultanément sur ordre, sur n premières sorties parallèles, l'une des portions qu'elles stockent, et
- son module de transfert est agencé, d'une première part, pour recevoir du module de gestion les adresses choisies de stockage de premiers segments successivement reçus, d'une deuxième part, pour délivrer, au module de gestion les adresses de stockage de certains de ces premiers segments en fonction d'un critère choisi pour recevoir en retour, en sortie des premières sorties parallèles, les portions de segment stockées dans les sous-mémoires aux adresses de stockage, et d'une troisième part, pour orienter les portions appartenant à des segments différents vers une ou plusieurs tables de routage (selon les besoins), de manière à déterminer en parallèle, à partir des données stockées dans ces tables de routage et d'une analyse portion après portion des différents segments, les données primaires et tertiaires associées aux différentes données secondaires.

Grâce à cette architecture nouvelle, le nombre de tables de routage parallèles peut désormais être choisi en fonction du débit des données à router. De plus, la conception originale du dispositif selon l'invention permet son implantation dans de nouveaux types de commutateurs-routeurs à architecture centralisée dans lesquels le contrôle du trafic et la mise en mémoire tampon, notamment, peuvent être partagés.

Préférentiellement, les données parviennent directement au module de gestion sous la forme de segments de longueurs égales qui n'ont plus qu'à être décomposés en portions. Cette segmentation est alors effectuée, par exemple, par l'étage de transport de données d'un dispositif d'aiguillage.

Avantageusement, les modules de gestion et de transfert constituent un étage de routage de type L3F que l'on peut coupler à un étage de transport de données.

Dans un mode de réalisation préférentiel, le module de transfert comprend un étage d'entrée muni, d'une première part, de n registres stockant les adresses de stockage des n premiers segments reçus, d'une deuxième part, d'une mémoire tampon d'entrée recevant du module de gestion les adresses choisies des premiers segments pour alimenter les registres, et d'une troisième part, d'une unité d'aiguillage (ou « shifter ») comportant n entrées alimentées respectivement en n portions de segment par les n premières sorties parallèles, et de 1 à n secondes sorties propres à délivrer les portions orientées appartenant à des segments différents. Préférentiellement, chaque unité d'aiguillage comporte autant d'entrées que de secondes sorties.

Egalement dans un mode de réalisation préférentiel, le module de transfert comprend de 1 à n (le nombre dépend du nombre de paquets par seconde à router) unités de routage alimentées en portions de segments différents par les secondes sorties, comportant chacune une mémoire réinscriptible stockant l'une des tables de routage et propres à déterminer en parallèle les données primaires et tertiaires associées aux différentes données secondaires. Préférentiellement, le module de transfert comprend autant d'unités de routage parallèles que de secondes sorties.

Selon une autre caractéristique de l'invention, chaque table de routage constitue ce que l'homme de l'art appelle en anglais une « trie table ». Elle stocke par conséquent dans des rangées des données primaires qui définissent des mots représentatifs de préfixes de routage, chaque portion de segment reçue étant alors utilisée pour adresser l'un des mots d'une rangée. Préférentiellement, chaque table de routage (ou trie table) stocke des données primaires représentatives de mots de premier et second types, les premier et second types définissant respectivement des mots dits « intermédiaires » et « finaux », seuls les mots finaux représentants des nouvelles données primaires de routage.

Il est par ailleurs avantageux que le module de transfert comprenne un étage de sortie muni de mémoires tampon de sortie, en nombre égal au nombre de ports de sortie de l'étage de transport, et capables de recevoir les données tertiaires, les nouvelles données primaires et l'adresse de stockage des unités de routage. En variante, on peut prévoir un groupe de mémoires tampon de sortie pour chaque port de sortie, par exemple pour assurer plusieurs qualités de service différentes. Dans ce cas, il est avantageux que l'étage de sortie comporte également un multiplexeur alimenté par les différentes unités de routage et alimentant les différentes mémoires tampon de sortie.

Egalement de préférence, lorsque les unités de routage comportent des tables de routage de type « trie table », elles peuvent chacune, d'une part, comprendre un module intermédiaire muni d'une sortie couplée à la mémoire réinscriptible (stockant la trie table) et des première et seconde entrées alimentées respectivement par l'une des secondes sorties de l'étage d'entrée et par la sortie de la mémoire réinscriptible, et d'autre part, être agencée pour extraire de la table de routage le mot qui se trouve stocké à l'adresse désignée par la portion reçue, puis pour délivrer ce mot sur la sortie de la mémoire réinscriptible de sorte qu'il alimente la seconde entrée du module intermédiaire ou l'étage de sortie selon que le mot extrait est du premier ou du second type. Dans ce cas, le module intermédiaire est agencé, à réception de données représentatives d'un mot du premier type, pour extraire de la table de routage le mot qui se trouve stocké à l'adresse désignée par ce mot du premier type, puis à délivrer le mot extrait sur la sortie de la mémoire réinscriptible de sorte qu'il alimente la seconde entrée du module intermédiaire ou l'étage de sortie selon que ce mot extrait est du premier ou du second type. Cette opération est réitérée jusqu'à ce qu'un mot final (second type) soit extrait de la table de routage concernée.

Dans un mode de réalisation préféré, les mémoires tampon d'entrée et de sortie sont de type « FIFO » (pour « First In First Out »).

L'invention propose également un routeur ou un dispositif d'aiguillage (« de type switch-routeur ») équipé d'un étage de transport de données et d'un dispositif selon l'invention. Dans ce cas, le dispositif selon l'invention constitue l'étage de routage du routeur ou du switch-routeur, couplé à l'étage de transport de données.

L'invention propose également un procédé de routage de données secondaires, associées à des données primaires de routage et à une adresse de stockage, dans lequel on détermine à partir des données primaires et de données stockées dans au moins une table de routage des données tertiaires désignant au moins un port de sortie et de nouvelles données primaires de routage, puis on délivre les données primaires et tertiaires déterminées, de sorte que certaines au moins des nouvelles données primaires soient combinées aux données secondaires à router, stockées à l'adresse de stockage, puis transmises sur chaque port de sortie désigné par les données tertiaires.

Ce procédé se caractérise par le fait que la phase de détermination consiste, d'une première part, à stocker dans n sous-mémoires, à des adresses choisies, les portions de chaque segment issu d'une décomposition de paquets de données reçus à router, dont des premiers segments, d'une deuxième part, à stocker à des endroits choisis les adresses choisies de stockage de premiers segments reçus successivement, puis, en fonction d'un critère choisi, à extraire des sous-mémoires, en parallèle, les portions stockées aux adresses de stockage des premiers segments contenues dans certains des endroits choisis pour délivrer, simultanément et en parallèle, les portions de segment, et d'une troisième part, à orienter les portions appartenant à des segments différents vers une ou plusieurs tables de routage (selon les besoins), de manière à déterminer en parallèle, à partir des données stockées dans ces tables de routage et d'une analyse portion après portion des différents segments, les données primaires et tertiaires à associer aux différentes données secondaires à router.

Préférentiellement, on reçoit les données de routage sous forme de segments de longueurs égales.

Egalement de préférence, le routage est de type L3F.

Egalement de préférence, on stocke les adresses de stockage des portions d'un même segment dans n registres sensiblement identiques.

Toujours de préférence, on prévoit autant de tables de routage que de sous-mémoires.

Selon une autre caractéristique du procédé selon l'invention, chaque table de routage (ou « trie table ») stocke sous forme de rangées des données primaires qui définissent des mots représentatifs de préfixes de routage, chaque portion de segment reçue permettant d'adresser l'un des mots d'une rangée. Préférentiellement, les données primaires sont représentatives de mots de premier et second types. Dans ce cas, on extrait de la table de routage, pendant la phase de détermination, le mot stocké à l'adresse qui est désignée par la portion de segment reçue, puis on délivre le mot de sorte qu'il alimente de nouveau la table de routage ou les ports de sortie selon que ce mot extrait est du premier ou du second type, et chaque fois qu'un mot du premier type est délivré on extrait de la table un autre mot stocké à l'adresse désignée par le mot délivré jusqu'à obtention d'un mot d'un second type.

Les dispositifs et le procédé selon l'invention, présentés ci-avant, sont particulièrement bien adaptés, bien que de façon non exclusive, aux standards de routage tels que IP (pour « Internet Protocol »), quel que soit le média, et ceux correspondant aux protocoles sans connexion.

D'autres caractéristiques et avantages de l'invention apparaîtront à l'examen de la description détaillée ci-après, et des dessins annexés, sur lesquels :
- la figure 1 est un diagramme bloc illustrant de façon schématique un dispositif de routage selon l'invention, formant un routeur,
- la figure 2 est un diagramme bloc détaillant de façon schématique l'étage de routage du dispositif de la figure 1,
- la figure 3 illustre de façon schématique un exemple d'organisation de la mémoire tampon du module de gestion de l'étage de routage de la figure 2,
- la figure 4 illustre de façon schématique un exemple de réalisation de la mémoire tampon du module de gestion de l'étage de routage de la figure 2,
- la figure 5 illustre de façon schématique un mode de stockage (écriture) de données dans la mémoire tampon du module de gestion de l'étage de routage de la figure 2,
- la figure 6 illustre de façon schématique un exemple de mécanisme de routage,
- les figures 7A et 7B illustrent de façon schématique les signaux générés par l'horloge principale du dispositif et le lien entre cette horloge principale et des compteurs du dispositif,
- la figure 8 est une table illustrant un mode de lecture de données à l'entrée du module d'aiguillage du module de transfert de l'étage de routage,
- la figure 9 est une table illustrant un mode de lecture de données en sortie du module d'aiguillage du module de transfert de l'étage de routage,
- la figure 10 est un exemple de table de routage de type « trie table ».

Les dessins annexés sont, pour l'essentiel, de caractère certain. En conséquence, ils pourront non seulement servir à compléter l'invention, mais aussi contribuer à sa définition, le cas échéant.

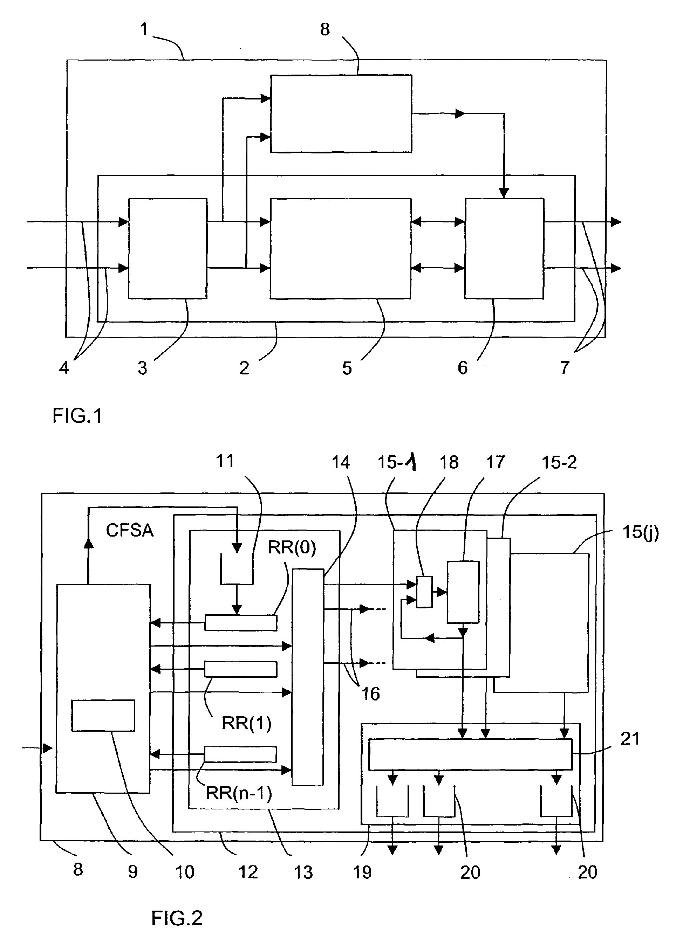

On se réfère tout d'abord à la figure 1 pour décrire un exemple de réalisation d'un dispositif de routage selon l'invention, formant un routeur.

Bien entendu, le dispositif selon l'invention pourrait être également implanté dans un dispositif d'aiguillage de type switch-routeur, notamment à fonctions de commutation et de routage centralisées. Il pourrait également ne constituer que l'étage de routage d'un routeur.

Le dispositif 1 comprend tout d'abord un étage de transport de données 2, comportant un sous-étage d'entrée (ou « ingress stage ») 3, muni de ports d'entrée 4 pour recevoir des paquets de données, une mémoire tampon 5, pour stocker temporairement des données à aiguiller communiquées par le sous-étage d'entrée 3, et un sous-étage de sortie (ou « egress stage ») 6, muni de ports de sortie 7 pour délivrer des données aiguillées issues, notamment, de la mémoire tampon 5.

Ce dispositif 1 comporte également un étage de routage 8, alimenté en données de routage par le sous-étage d'entrée 3 et alimentant le sous-étage de sortie 6 en nouvelles données de routage.

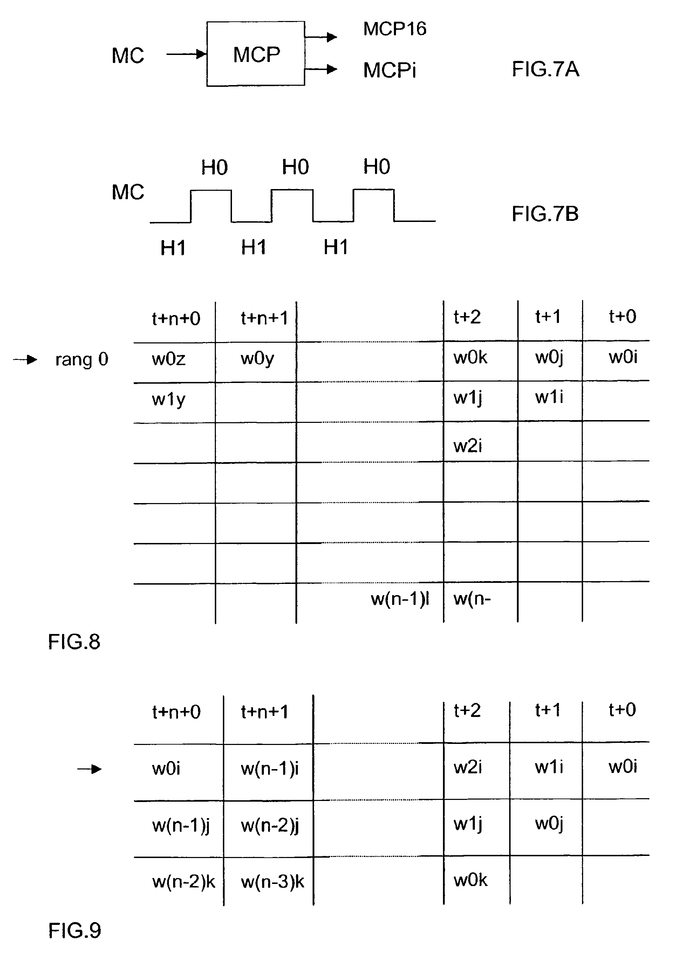

Les constituants du dispositif 1 sont synchronisés par une horloge principale MCL dont la période sert de base d'incrémentation d'un compteur principal MCP et de compteurs auxiliaires (MCP16, MCPi), comme illustré sur les figures 7A et 7B. MCPx est un compteur, modulo x, incrémenté au rythme de MCL.

L'étage de transport de données 2 est décrit de façon détaillée dans les documents brevets US 5,237,564 et EP 00 440 281.Par conséquent, seules seront décrites ici les fonctions principales de cet étage de transport 2, et non leurs fonctions auxiliaires.

Le sous-étage d'entrée 3 est tout d'abord agencé pour recevoir sur ses I ports d'entrée 4 des paquets de données de longueurs variables, et pour extraire de ces données, d'une part, les données primaires, représentatives d'informations de routage qui doivent être traitées par l'étage de routage 8, et d'autre part, les données secondaires qui doivent être routées.

Ces données secondaires sont transmises à la mémoire tampon 5 afin d'y être stockées à une adresse de stockage FSA(s). Par exemple, si la mémoire tampon 5 peut stocker s segments, alors un compteur MCPs donne à chaque instant l'adresse de stockage FSA(s), dans cette mémoire tampon 5, du segment arrivant. Les données primaires sont communiquées à l'étage de routage 8, accompagnées de l'adresse de stockage FSA(s), qui est en fait la valeur courante de MCPs, où les données secondaires associées ont été temporairement mémorisées dans la mémoire tampon 5.

Préférentiellement, comme décrit dans les documents brevet précités, les paquets de données reçus font d'abord l'objet d'une segmentation dans le sous-étage d'entrée 3 avant que leurs données ne soient transmises à la mémoire tampon 5 et à l'étage de routage 8. Cette segmentation consiste à découper chaque paquet en segments de longueurs égales tout en conservant le lien qui les unit au niveau de la mémoire tampon 5 et de l'étage de routage 8. Une fois les nouvelles informations de routage déterminées par l'étage de routage 8, on recompose les données secondaires du paquet initial, en attente de transmission dans la mémoire tampon 5, en leur adjoignant les nouvelles informations de routage (données primaires), avant qu'elles ne soient communiquées aux ports de sortie 7.

Le nombre de segments d'un paquet reçu (PL(i)) est compté par l'étage de routage 8 au fur et à mesure de l'arrivée des segments.

Les données primaires sont habituellement contenues dans le premier segment du paquet reçu. Elles comportent généralement les port et adresse de la source du paquet ainsi que les port et adresse du destinataire du paquet.

Dans le cas du routage, les données primaires sont généralement des informations de routage, comme par exemple l'adresse de destination, qui servent d'index à la table de routage. L'information de routage est généralement un identifiant global (c'est-à-dire qu'aucune connexion ne doit être établie avant la transmission du paquet). De nombreux protocoles de routage fonctionnent selon ce principe. On citera notamment Internet Protocol (IP), quel qu'en soit le média. Dans le cas du protocole IP, l'identifiant global, appelé adresse IP, sert à router le paquet localement et les nouvelles données primaires délivrées par la table de routage forment un nouveau label qui servira au routage dans le dispositif suivant.

Lorsque le dispositif 1 comporte I ports d'entrée 4, chaque segment est divisé en I portions (ou mots). Le temps de traitement d'un mot (ou portion) est égal à la période de l'horloge principale MCL. Les ports d'entrée 4 sont agencés de manière à ce qu'un segment arrivant sur le port i soit placé un mot avant un segment arrivant sur le port i-1, module I. De même, les ports de sortie 7 sont agencés de manière à ce qu'un segment transmis sur le port i soit placé un mot avant un segment transmis sur le port i-1, modulo I.

On se réfère maintenant aux figures 2 à 10 pour décrire un exemple de réalisation d'un étage de routage selon l'invention.

L'étage de routage 8, illustré sur la figure 2, est de type L3F. Il comporte tout d'abord un module de gestion 9 comprenant une mémoire tampon de gestion 10 dans laquelle sont stockées, à une adresse choisie i, les données primaires de routage contenues dans le premier segment transmis par le sous-étage d'entrée 3, l'adresse de stockage FSA(s) dans la mémoire tampon 5 du premier segment des données secondaires associées aux données primaires, ainsi que de préférence le nombre total de segments PL(i) du paquet associé.

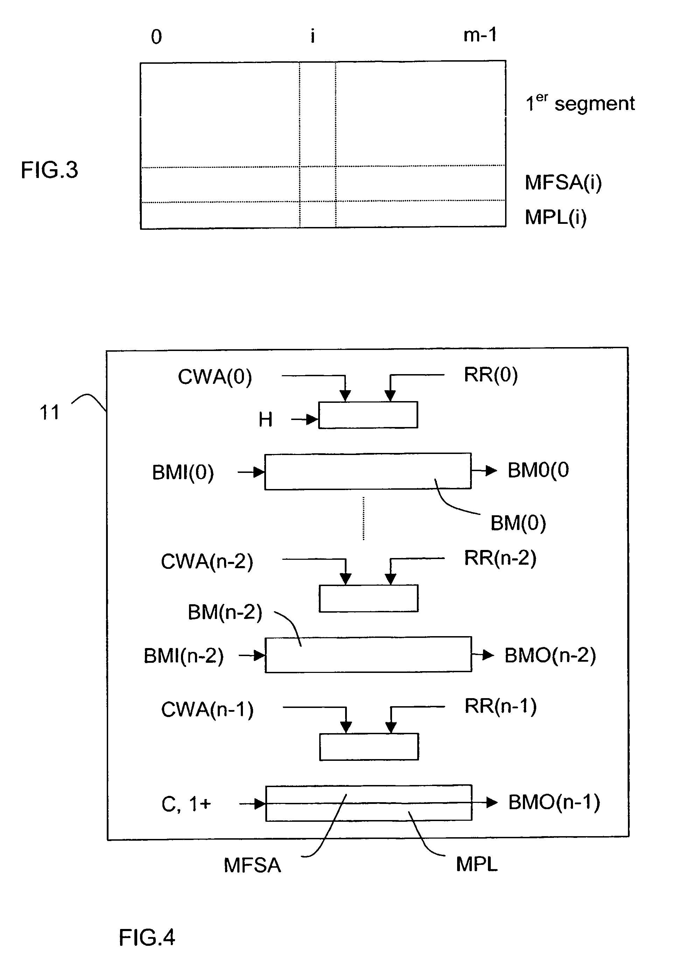

Préférentiellement, comme illustré sur la figure 3, les premiers segments et les données complémentaires (MFSA(i) et MPL(i)) sont stockés verticalement dans la mémoire tampon de gestion 10 qui fonctionne, de préférence, par décalage circulaire. Par conséquent, si la mémoire tampon 10 comporte m entrées (ou colonnes), un premier segment sera remplacé par un nouveau premier segment lorsque m paquets à router auront été reçus.

La taille m de la mémoire tampon 10 peut être facilement contrôlée en fonction du débit des paquets entrant dans le dispositif 1 et du débit de service du dispositif 1 (ou débit auquel sont routés les paquets). Préférentiellement, le débit de service est plus élevé que le débit d'entrée, de sorte que, même avec une petite taille m de mémoire tampon 10, on puisse garantir qu'aucun segment ne sera perdu (ou remplacé ; ce qui entraînerait la perte du paquet associé).

Les segments qui parviennent au module de gestion 9 sont décomposés en portions de segment constituant chacune un mot. Par conséquent, comme cela est illustré schématiquement sur la figure 4, la mémoire tampon de gestion 10 est subdivisée en n sous-mémoires BM(0) à BM(n-1), identiques et indépendantes, chaque sous-mémoire BM(r) étant destinée au stockage d'une portion (ou mot) M(r) possédant le rang r dans tous les segments. Chaque mot (ou portion) est stocké dans les sous-mémoires BM(r) à l'aide d'un bus BMI(r) et extrait de cette sous-mémoire à l'aide d'un bus BMO(r).

L'horloge principale MCL synchronise la lecture (ou extraction) et l'écriture (ou stockage) de la mémoire tampon 10. Comme illustré sur la figure 7A, la demie-période d'horloge H1 est dédiée à l'écriture, tandis que la demie-période d'horloge H0 est dédiée à la lecture. Par ailleurs, comme illustré sur la figure 3, l'adressage des sous-mémoires BM(r), en lecture comme en écriture, est assurée par un multiplexeur.

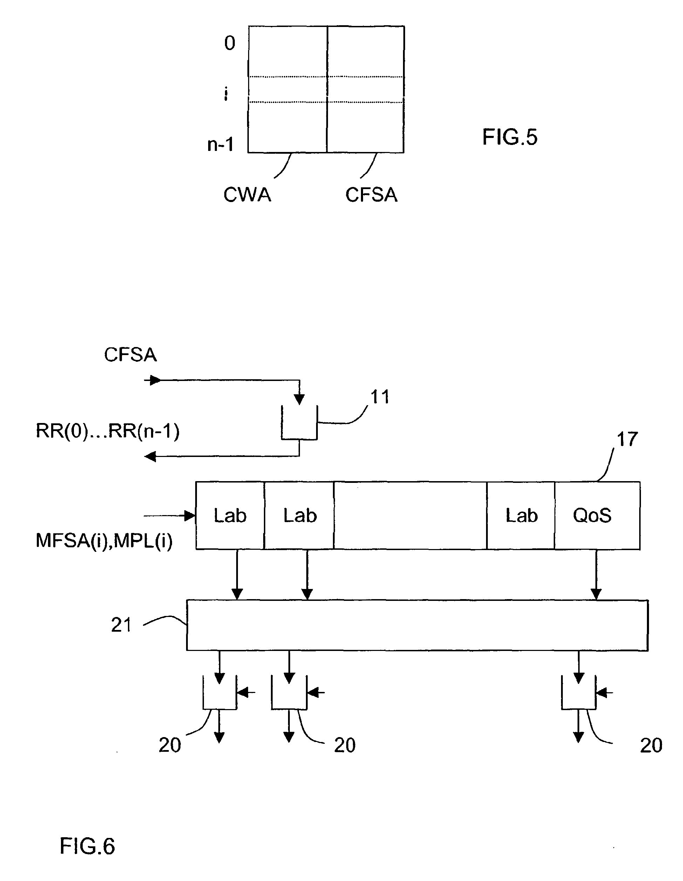

Plus précisément, comme illustré sur la figure 5, pour assurer l'écriture, on associe deux compteurs à chaque sous-mémoire BM(r). Le compteur CWA(r) contient l'adresse de la mémoire tampon 10 où l'on doit stocker un mot (ou portion) entrant de rang r d'un segment. Le compteur CFSA(r) contient l'adresse de la mémoire tampon 10 où se trouve stocké le premier segment d'un paquet. La mémoire tampon 10 comportant n sous-mémoires BM(r), il existe donc n jeux de deux compteurs (CWA, CFSA).

Ces compteurs sont préférentiellement agencés sous la forme d'un tampon à décalage circulaire, qui décale d'un rang les données stockées lors de chaque période d'horloge MCL consécutive à une opération d'écriture. Par exemple, la rangée « 0 » va prendre la valeur de la rangée « n-1 », la rangée « 1 » va prendre la valeur de la rangée « 0 », ..., la rangée « n-1 » va prendre la valeur de la rangée « n-2 ».

Avant que le décalage ne soit effectué, deux cas peuvent survenir. Si le premier segment d'un nouveau paquet arrive, on a alors, compte tenu du fait que i représente la valeur de CFSA(0) :
- MFSA(i) : adresse de ce premier segment dans la mémoire tampon 5, donnée par la valeur du compteur principal MCP(s), où s est la taille de la mémoire tampon 5 ;
- MPL(i) = 1 ;
- CFSA(0) = CWA(0) ; et
- CWA(n-1) = CWA(0) + 1 (modulo m). Cette dernière opération incrémente l'adresse où l'on doit stocker le prochain segment reçu, assurant ainsi que le segment précédemment arrivé ne sera pas écrasé. Cette opération n'est pas effectuée lorsque le segment en cours n'est pas le premier segment d'un paquet. Par conséquent, ce segment sera écrasé par les futurs segments jusqu'à ce qu'un nouveau premier segment arrive.

Si le segment reçu n'est pas le premier segment d'un nouveau paquet, on a alors, compte tenu du fait que i représente la valeur de CFSA(0):
- MPL(i) = MPL(i) + 1 (modulo m).

Lorsque l'on reçoit le dernier segment d'un paquet, l'adresse du premier segment de ce paquet dans la mémoire tampon 10 (CFSA(0)) est placée dans la file d'une mémoire tampon d'entrée 11, de préférence de type FIFO, de sorte que les données primaires reçues soient traitées en fonction de leur ordre d'arrivé dans l'étage de routage 8. On ne stocke que l'adresse du premier segment dans la mémoire FIFO d'entrée 11, car les différentes portions de ce premier segment sont stockées dans une même colonne de la mémoire tampon 10 (l'adresse stockée est donc celle de la colonne). Si cette mémoire FIFO d'entrée 11 contient des données en tête de sa file d'attente, celles-ci sont traitées, tout comme les données secondaires du paquet associé. De préférence, la taille de la mémoire FIFO d'entrée 11 est choisie égale à la taille de la mémoire tampon de gestion 10.

Cette mémoire FIFO d'entrée 11 appartient à un module de transfert 12 de l'étage de routage 8, couplé au module de gestion 9, et sur lequel on reviendra plus loin.

De préférence, tous les ports des sous-étages d'entrée 3 et de sortie 6 présentent le même débit que celui des cartes d'interface de ligne couplées au dispositif 1. Mais, comme décrit dans le document brevet EP 00 440 281, on peut utiliser des cartes d'interface de ligne présentant un débit égal à un multiple entier de fois celui des ports d'entrée 4 et de sortie 7. Par exemple, lorsque le débit des ports est égal à 2,4 Gbps, on peut associer quatre ports à une interface de ligne au format OC192c.

Pour ce faire, on peut connecter chaque interface de ligne à k ports successifs [j, j+1, ..., j+k-1]. Le cas k = 1 correspond à une interface de ligne connectée à un unique port. Dans cette variante, si l'on suppose que le premier mot d'un segment est reçu sur le port j+x (avec la condition 0 ≤ x < k) les deux cas présentés ci-avant sont modifiés comme suit.

Si le premier segment d'un nouveau paquet arrive, on a alors, compte tenu du fait que i représente la valeur de CFSA(0 + x) :
- MFSA(i) : adresse de ce premier segment dans la mémoire tampon 5, donnée par la valeur du compteur principal MCP(s), où s est la taille de la mémoire tampon 5 ;
- MPL(i) = 1 ;
- CFSA(0 + x) = CWA(0+ x) ; et
- CWA(n-1 ) = CWA(0+ x) + 1 (modulo m).

Si le segment reçu n'est pas le premier segment d'un nouveau paquet, on a alors, compte tenu du fait que i représente la valeur de CFSA(0 + x) :
- MPL(i) = MPL(i) + 1 (modulo m).

Dans ce cas, parmi les k paires de compteurs (CWA, CFSA) associées à l'interface de ligne, seule la première paire est utilisée.

Comme indiqué précédemment, la lecture de la mémoire tampon 10 du module de gestion 9 s'effectue pendant la demie-période d'horloge MCL qui lui est réservée. Comme illustré sur la figure 6, chaque fois qu'un paquet a été intégralement reçu par l'étage de routage, et plus précisément par le module de gestion 9, l'adresse CFSA(0), où sont stockées les différentes portions (ou mots) de son premier segment dans la mémoire tampon 10 du module de gestion 9, est placée dans la queue de la file de la mémoire FIFO d'entrée 11. Pendant la demie-période dédiée à l'écriture dans la mémoire FIFO 11, on effectue les opérations suivantes :
- RR(i) = RR(i - 1);
- si la fifo 11 n'est pas vide la première valeur est transférée dans RR0 ; avant le transfert chaque RR(i+1) prend la valeur de RR(i).

Ces valeurs d'adresses seront ultérieurement communiquées au module de gestion 9 afin qu'il lise l'unique mot (ou portion) stockée dans chaque sous-mémoire BM(r) de sa mémoire tampon 10, à l'adresse désignée par la valeur du registre RR(r) associé.

Bien entendu, l'adresse peut varier d'une sous-mémoire à l'autre. En principe, à chaque période d'horloge une colonne différente est lue dans chaque sous-mémoire BM(i) de la mémoire tampon 10.

Le nombre de registres RR est égal au nombre maximal de portions à analyser, contenues dans un unique segment.

Ces informations (données primaires, adresse de stockage FSA(n) et nombre total de segments associé PL) sont alors communiquées, sensiblement simultanément, par le module de gestion 9 au module de transfert 12, sur n premières sorties parallèles.

La mémoire tampon 11 et les registres RR(r) font préférentiellement partie d'un étage d'entrée 13 du module de transfert 12, qui comprend en outre un module d'aiguillage 14 (ou « barrel shifter ») muni de n entrées respectivement alimentées par les n premières sorties du module de gestion 9.

Ce module d'aiguillage 14 est chargé de recevoir, des premières sorties du module de gestion 9, les données primaires, agencées sous la forme de portions (ou mots w(r)), et les données complémentaires associées (FSA(n) et PL(i)) pour les orienter vers une ou plusieurs unités de routage 15 via une ou plusieurs secondes sorties 16, au rythme fixé par l'horloge principale MCL. Plus précisément, le module d'aiguillage 14 reçoit en parallèles les portions successives des différents segments, et les oriente sur ses différentes secondes sorties 16, en prenant soin de délivrer toutes les portions d'un même segment sur la même sortie 16, afin que les différents segments soient analysés portion après portion, en parallèle. Le module d'aiguillage 14 possède par conséquent n états différents et ordonnés, et passe d'un état à l'état suivant à chaque période de l'horloge principale MCL.

Pendant la demie-période dédiée à l'écriture dans la mémoire tampon de gestion 10 on effectue les opérations suivantes :
- RR(i) = RR(i - 1);
- si le prochain premier mot w0 d'un segment, stocké dans la sous-mémoire BM(0), doit être adressé au module de transfert 12 en vue de son traitement, alors la première adresse de portion, stockée en tête de la file d'attente de la mémoire FIFO d'entrée 11, est communiquée au premier registre RR(0). Si la tête de file est vide, alors on communique au premier registre RR(0) une valeur spécifiant qu'il n'y a pas de paquet associé.

Par ailleurs, pendant la demie-période dédiée à la lecture dans la mémoire tampon de gestion 10 on effectue les opérations suivantes :
- chaque adresse stockée dans un registre RR(i) permet de lire (ou extraire) de la sous-mémoire BM(i) associée le mot w(i) (ou portion) qu'elle contient ;
- les portions w(i) extraites sont alors adressées sur les n premières sorties au module d'aiguillage 14, qui les oriente vers l'une de ses secondes sorties 16 en fonction de l'état dans lequel il est placé (parmi ses n états différents) ;
- en parallèle à ce transfert de mots w(i), les données complémentaires (FSA(n) et PL(i)) sont communiquées au module d'aiguillage 14, puis à l'unité de routage 15 choisie.

Des exemples de modes de lecture et d'orientation de portions (ou mots) w(r) d'un segment sont illustrés sur les figures 8 et 9. Dans cet exemple, l'aiguilleur utilise 3 sorties, toutes les portions d'un même segment sont orientées vers la bonne seconde sortie, une portion à chaque période d'horloge. A l'instant t+0, w0i est lu et orienté vers la seconde sortie i. A l'instant t+1, w1i est lu et orienté vers la seconde sortie i ; w0j est lu et orienté vers la seconde sortie j. A l'instant t+2, w2i est lu et orienté vers la seconde sortie i ; w1j est lu et orienté vers la seconde sortie j ; w0k est lu et orienté vers la seconde sortie k. w2i est lu dans la sous-mémoire BM(2) et l'aiguilleur 14 l'oriente vers i, tandis que w1j est lu dans la sous-mémoire BM(1) et l'aiguilleur 14 l'oriente vers j, etc.

Préférentiellement, le module d'aiguillage 14 comporte autant d'entrées que de secondes sorties 16.

Le nombre d'unités de routage 15 est choisi en fonction du débit de données à router. Il peut par conséquent être égal au nombre de secondes sorties 16 du module d'aiguillage 14.

Lorsque le nombre d'unités de routage 15 est inférieur au nombre n de secondes sorties, on doit s'assurer que le segment à analyser, portion après portion, n'est pas transmis sur une seconde sortie 16 qui n'est pas associée à l'unité de routage choisie, à cet instant. Cette condition est satisfaite par le fait qu'une adresse de premier segment n'est transmise au premier registre RR(0) par la mémoire FIFO d'entrée 11 qu'à condition que le module d'aiguillage 14 soit dans un état autorisant le transfert, vers une unité de routage 15 disponible, du mot w(0) désigné par RR(0) dans BM(0). De la même manière, lorsque la tête de la file d'attente de la mémoire FIFO d'entrée 11 est vide (c'est-à-dire lorsque aucun paquet ne doit être routé), on transmet au module d'aiguillage 14 le mot w0, désigné par RR(0) dans BM(0), accompagné d'un bit signifiant que le segment est vide.

Ainsi, n segments au plus peuvent être lus en parallèle dans la mémoire tampon de gestion 10 du module de gestion 9 et transférés en parallèle de manière à être analysés, également en parallèle, par les unités de routage 15, via les secondes sorties 16 du module d'aiguillage 14.

Afin d'effectuer l'analyse des portions ordonnées de chaque segment transmis par l'une des secondes sorties 16 du module d'aiguillage 14, chaque unité de routage 15 comprend une mémoire réinscriptible 17, dans laquelle se trouve stockée une table de routage.

Préférentiellement, chaque table de routage est du type « trie table ». ce type de table est notamment décrit dans le document de V. Srinivasan and G. Varghese, 1999, "Fast address lookups using controlled prefix expansion", Transactions on Computer Systems17, 1 (Feb.), 1-40.

Contrairement à une table de routage standard, une trie table ne contient pas toutes les adresses et combinaisons d'adresses possibles. Les données primaires donc sont stockées dans des rangées sous la forme de mots de premier et second types représentatifs de préfixes nécessaires au routage des données secondaires. Un mot de premier type est dit « intermédiaire » dans la mesure où il sert à désigner un autre mot de la table de routage. Un mot de second type est dit « final » dans la mesure où il désigne effectivement des données primaires de routage (données tertiaires telles, que la liste de(s) port(s) de sortie 7 sur le(s)quel(s) les données secondaires doivent être transmises, nouvelles données primaires de routage (ou label(s)) à associer aux données secondaires correspondantes à router sur chaque port de sortie 7 désigné, éventuellement accompagnées d'informations complémentaires telles que la qualité de service).

Lorsque le dispositif selon l'invention utilise des trie tables, on prévoit dans chaque unité de routage 15 un module intermédiaire 18 comprenant une sortie couplée à la mémoire réinscriptible 17 (stockant la trie table) et des première et seconde entrées alimentées respectivement par l'une des secondes sorties du module d'aiguillage 14 et par la sortie de la mémoire réinscriptible 17.

L'analyse des portions (ou mots) reçues du module d'aiguillage 14 commence toujours, de préférence, par la première rangée R(0) de la table de routage. A chaque période de l'horloge principale MCL, la portion à analyser désigne une adresse de la rangée R(j) en cours de la table de routage (pour la première portion d'un segment, il s'agit initialement de la première rangée R(0)). Si le mot lu (ou extrait) à l'adresse désignée est du premier type (mot intermédiaire), alors il est communiqué au module intermédiaire 18. La valeur de ce mot désigne l'adresse où le prochain mot doit être lu, lors de la prochaine période d'horloge. Tant que le mot extrait est du premier type, on réitère la boucle de recherche. En revanche, si le mot lu est du second type (mot final), il est transmis à un étage de sortie 19 du module de transfert 12 avec les données complémentaires FSA(n) et PL(i), ainsi qu'éventuellement la qualité de service comme illustré sur la figure 6.

On peut ainsi analyser des adresses de longueurs variables.

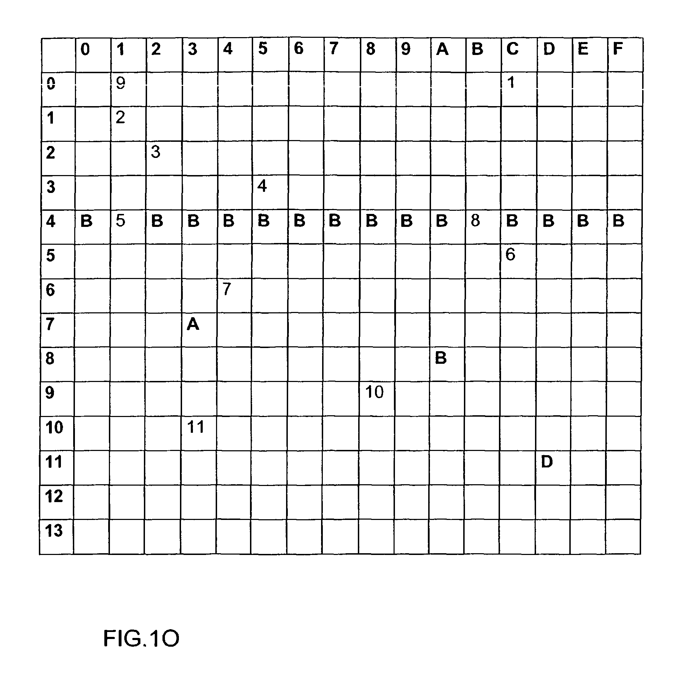

Un exemple de trie table est illustré sur la figure 10. Dans cet exemple, la table est initialisée aux adresses suivantes A : 21.35.1C.43/32, B : C1.35/16, C : C1.35.BA/24, D : 18.2D/16. Chaque portion a une longueur de 4bits.

Conformément à cet exemple, si l'on reçoit un paquet possédant une adresse de destination égale à 18.2D.29.13 (en notation hexadécimale), les quatre premiers bits de cette adresse (1) désignent un mot de la ligne 0 (L0), On obtient L0(1) = 9. On se sert alors de la deuxième portion (ici égale à 8) pour adresser la ligne 9 (désignée par la valeur égale à 9, obtenue). On obtient L9(8) = 10. On se sert ensuite de la troisième portion (ici égale à 2) pour adresser la ligne 10 (désignée par la valeur égale à 10, obtenue). On obtient L10(2) = 11. On se sert enfin de la quatrième portion (ici égale à D) pour adresser la ligne 11 (désignée par la valeur égale à 11, obtenue). On obtient L11(D) = mot final, ce qui met fin à l'analyse.

L'étage de sortie 19 du module de transfert 12 comporte des mémoires tampon de sortie 20, en nombre au moins égal au nombre de ports de sortie 7 du sous-étage de sortie 6 de l'étage de transport de données 2. Ces mémoires de sortie 20 sont de préférence de type FIFO. Préférentiellement, l'étage de sortie 19 comporte également un multiplexeur 21 alimenté par les sorties des unités de routage 15(j) et alimentant les différentes mémoires FIFO de sortie 20 avec les nouvelles données primaires, les données tertiaires destinées aux ports de sortie 7 qui leur sont respectivement associés, l'adresse de stockage FSA(s) dans la mémoire tampon 5 des données secondaires à router et le nombre total de segments associé PL.

En variante, lorsque les tables de routage délivrent également des informations complémentaires, telles que la qualité de service (QoS), on peut associer chaque port de sortie 7 à un groupe de mémoires FIFO de sortie 20. Chaque groupe comprend alors une mémoire FIFO de sortie associée à chaque qualité de service proposée.

Le multiplexeur 21 est agencé pour transmettre aux mémoires FIFO de sortie 20, associées aux ports de sortie 7, pendant chaque période de l'horloge principale MCL, les données délivrées par l'une des unités de routage 15(j). Ainsi, les différentes unités de routage 15(j) sont considérées par le multiplexeur 21 les unes après les autres.

Les I mémoires FIFO de sortie 20 sont explorées de façon cyclique. Une mémoire FIFO 20 est lue lors de chaque période de l'horloge principale MCL, sachant qu'un cycle comporte I périodes d'horloge. Lors de la période i (modulo I), si aucun paquet n'est sur le point d'être transmis sur le port de sortie i (7), la mémoire FIFO de sortie i (20), associée, est lue et délivre son contenu (adresse FSA(s), nombre de segments associé PL et labels), de sorte qu'à la période d'horloge suivante les données secondaires associées puissent être transmises sur le port de sortie i (7) après ajout des nouvelles données primaires et tertiaires.

Les étages de transport de données 2 et de routage 8 présentés ci-avant ne sont donnés qu'à titre d'exemple illustratif et peuvent faire l'objet de très nombreuses variantes et adaptations. Ils peuvent notamment faire l'objet de circuits séparés, mais couplés les uns aux autres, ou d'un unique circuit, éventuellement intégré(s) sur une même carte électronique. Par ailleurs, ces étages sont principalement constitués de matériels électroniques, mais ils peuvent également comporter des modules logiciels, notamment destinés à gérer leurs fonctionnements respectifs et/ou conjoints.

L'invention offre également un procédé de routage de données secondaires, associées à des données primaires de routage et à une adresse de stockage FSA(s), dans lequel on détermine, à partir des données primaires et de données stockées dans au moins une table de routage, des données tertiaires désignant au moins un port de sortie 7 et de nouvelles données primaires de routage, puis on délivre les données primaires et tertiaires déterminées, de sorte que certaines au moins des nouvelles données primaires soient combinées aux données secondaires à router, stockées à l'adresse de stockage FSA(s), puis transmises sur chaque port de sortie 7 désigné par les données tertiaires.

Ce procédé peut être mis en oeuvre à l'aide des dispositifs présentés ci-avant. Les fonctions et sous-fonctions principales et optionnelles assurées par les étapes de ce procédé étant sensiblement identiques à celles assurées par les différents moyens constituants les dispositifs, seules seront résumées ci-après les étapes mettant en oeuvre les fonctions principales du procédé selon l'invention.

Le procédé se caractérise par le fait que sa phase de détermination consiste, d'une première part, à stocker dans n sous-mémoires BM(r), à des adresses choisies, les portions de chaque segment issu d'une décomposition de paquets de données reçus à router, d'une deuxième part, à stocker à des endroits choisis les adresses choisies de stockage des premiers segments successivement reçus, puis, en fonction d'un critère choisi, à extraire des sous-mémoires BM(r), en parallèle, les portions stockées aux adresses de stockage des premiers segments contenues dans certains des endroits choisis pour délivrer, simultanément et en parallèle, ces portions de segment, et d'une troisième part, à orienter les portions appartenant à des segments différents vers une ou plusieurs tables de routage (selon les besoins), de manière à déterminer en parallèle, à partir des données stockées dans ces tables de routage et d'une analyse des différents segments, portion après portion, les données primaires et tertiaires à associer aux différentes données secondaires à router.

Préférentiellement, les données de routage sont traitées après avoir été décomposées en segments de longueurs égales, par exemple par une étape préliminaire.

Par ailleurs, il est avantageux de stocker les adresses de stockage de n premiers segments successivement reçus dans n registres parallèles, sensiblement identiques. De même, on peut traiter en parallèle jusqu'à n segments dès lors que l'on prévoit autant de tables de routage que de sous-mémoires BM(r).

Selon une autre caractéristique du procédé, chaque table de routage est du type « trie table ». Dans ce cas, on extrait de la table de routage, pendant la phase de détermination, le mot stocké à l'adresse qui est désignée par la portion de segment reçue, puis on délivre ce mot de sorte qu'il alimente de nouveau la table de routage ou les ports de sortie (couplées au multiplexeur 21) selon que ce mot extrait est du premier ou du second type, et chaque fois qu'un mot du premier type est délivré on extrait de la table un autre mot stocké à l'adresse désignée par le mot délivré jusqu'à obtention d'un mot d'un second type.

Grâce à l'invention, le dispositif de routage est transparent au type de protocole de routage utilisé. Il suffit en effet de configurer les tables de routage pour un fonctionnement selon le protocole choisi (par exemple IPV4 ou IPV6).

Par ailleurs, l'invention permet une adaptation à tout type de débit par un choix approprié du nombre d'unités de routage parallèles, et elle préserve le caractère séquentiel de paquets de données appartenant à un même flux.

D'autre part, le dispositif selon l'invention peut être intégré dans les commutateurs-routeurs à architecture distribuée ou centralisée. On entend ici par « architecture centralisée », une architecture dans laquelle on centralise (ou partage) les principales fonctionnalités d'un routeur et d'un commutateur, qui ne sont pas, par nature, liées à une interface de ligne, comme par exemple la mise en mémoire tampon, la commutation, le routage, le contrôle du trafic et de la qualité de service.

L'invention permet également d'effectuer un routage en mode « diffusion totale » (« broadcast ») ou en mode « point à multi-point » (« multicast »), sous réserve que le nombre maximal de branches de l'arbre de diffusion multi-point soit égal au nombre de ports du dispositif.

En outre, l'invention permet d'utiliser n'importe quel type de protocole sur les interfaces de ligne, et n'importe quel nombre d'interfaces de ligne, y compris à des débits de type OC192c, ou supérieurs.

L'invention ne se limite pas aux modes de réalisation de dispositifs et de procédé décrits ci-avant, seulement à titre d'exemple, mais elle englobe toutes les variantes que pourra envisager l'homme de l'art dans le cadre des revendications ci-après.

## Revendications

1. Dispositif de routage de données, comprenant i) un module de gestion (9) agencé pour recevoir des données primaires de routage et une adresse de stockage (FSA(s)) de données secondaires associées auxdites données primaires, et ii) un module de transfert (12) agencé pour déterminer à partir de ces données et de données stockées dans au moins une table de routage des données tertiaires désignant au moins un port de sortie (7) d'un étage de transport de données (2) et de nouvelles données primaires de routage, et pour délivrer audit étage de transport (2) les données primaires et tertiaires déterminées, de sorte que certaines au moins desdites nouvelles données primaires soient combinées auxdites données secondaires stockées à ladite adresse de stockage (FSA(s)) puis transmises sur chaque port de sortie (7) désigné par lesdites données tertiaires,
**caractérisé en ce que** ledit module de gestion (9) comprend une mémoire tampon (10) subdivisée en n sous-mémoires propres chacune à stocker à une adresse choisie une portion de chaque segment issu d'une décomposition de paquet de données reçu à router, dont un premier segment, et à délivrer simultanément sur ordre, sur n premières sorties parallèles, l'une des portions qu'elles stockent,
et **en ce que** le module de transfert (12) est agencé pour i) recevoir du module de gestion (9) les adresses choisies de stockage des premiers segments des paquets à router, ii) délivrer au module de gestion certaines de ces adresses de stockage en fonction d'un critère choisi de manière à recevoir en retour sur les premières sorties parallèles les portions de segment stockées auxdites adresses de stockage, et iii) orienter les portions appartenant à des segments différents vers au moins une table de routage (15-1, ... 15-j) de manière à déterminer, à partir des données stockées dans ces tables de routage et d'une analyse portion après portion des différents segments, lesdites données primaires et tertiaires associées aux différentes données secondaires à router.

2. Dispositif selon la revendication 1, **caractérisé en ce que** ledit module de transfert (12) comporte au moins deux tables de routage (15) pour assurer une analyse en parallèle de segments différents.

3. Dispositif selon l'une des revendications 1 et 2, **caractérisé en ce que** ledit module de gestion (9) est agencé pour recevoir les données sous forme de segments de longueurs égales.

4. Dispositif selon l'une des revendications 1 à 3, **caractérisé en ce que** lesdits modules de gestion (9) et de transfert (12) constituent un étage de routage (8) de type L3F.

5. Dispositif selon l'une des revendications 1 à 4, **caractérisé en ce que** le module de transfert (12) comprend un étage d'entrée (13) muni i) de n registres (RR) propres à stocker les adresses de stockage de n premiers segments, ii) d'une mémoire tampon d'entrée (11) propre à recevoir du module de gestion (9) lesdites adresses choisies desdits premiers segments pour alimenter lesdits registres (RR), et iii) d'un module d'aiguillage (14) comportant i) n entrées alimentées respectivement en n portions de segment par les n premières sorties parallèles, et ii) au moins une seconde sortie (16) propres à délivrer lesdites portions orientées appartenant à des segments différents.

6. Dispositif selon la revendication 5, **caractérisé en ce que** le module d'aiguillage (14) comporte n entrées et n secondes sorties.

7. Dispositif selon l'une des revendications 2 à 5 en combinaison avec la revendication 6, **caractérisé en ce que** ledit module de transfert (12) comprend un nombre d'unités de routage (15), compris entre 1 et n, lesdites unités de routage étant alimentées en portions de segments différents par lesdites secondes sorties (16), comportant chacune une mémoire réinscriptible (17) stockant l'une des tables de routage et propres à déterminer en parallèle lesdites données primaires et tertiaires associées aux différentes données secondaires à router.

8. Dispositif selon l'une des revendications 1 à 7, **caractérisé en ce que** chaque table de routage stocke sous forme de rangées des données primaires définissant des mots représentatifs de préfixes de routage, chaque portion de segment reçue permettant d'adresser l'un desdits mots d'une rangée.

9. Dispositif selon la revendication 8, **caractérisé en ce que** chaque table de routage stocke des données primaires représentatives de mots de premier et second types.

10. Dispositif selon l'une des revendications 1 à 9, **caractérisé en ce que** ledit module de transfert (12) comprend un étage de sortie (19) muni de mémoires tampon de sortie (20), en nombre égal au nombre de ports de sortie (7) de l'étage de transport (2), et propres à recevoir lesdites données tertiaires, lesdites nouvelles données primaires et ladite adresse de stockage (FSA(s)) des unités de routage (15).

11. Dispositif selon l'une des revendications 1 à 9, **caractérisé en ce que** ledit module de transfert (12) comprend un étage de sortie (19) muni de groupes de mémoires tampon de sortie (20), en nombre égal au nombre de ports de sortie (7) de l'étage de transport (2), chaque groupe étant propre à recevoir lesdites données tertiaires, lesdites nouvelles données primaires et ladite adresse de stockage (FSA(s)) des unités de routage (15).

12. Dispositif selon la revendication 11, **caractérisé en ce que** les mémoires tampon de sortie (20) d'un groupe sont associées à des qualités de service différentes.

13. Dispositif selon l'une des revendications 10 à 12, **caractérisé en ce que** ledit étage de sortie (19) comporte un multiplexeur (21) alimenté par les unités de routage (15) et alimentant lesdites mémoires tampon de sortie (20).

14. Dispositif selon la revendication 9 en combinaison avec l'une des revendications 10 à 13, **caractérisé en ce que** chaque unité de routage (15) i) comprend un module intermédiaire (18) comportant une sortie couplée à la mémoire réinscriptible (17) et des première et secondes entrées alimentées respectivement par l'une des secondes sorties de l'étage d'entrée (13) et par la sortie de ladite mémoire réinscriptible (17), et ii) est agencée pour extraire de la table de routage le mot stocké à l'adresse désignée par la portion reçue, puis à délivrer ledit mot sur la sortie de ladite mémoire réinscriptible de sorte qu'il alimente la seconde entrée du module intermédiaire (18) ou ledit étage de sortie (19) selon que ledit mot extrait est du premier ou du second type, et **en ce que** ledit module intermédiaire (18) est agencé, à réception de données représentatives d'un mot du premier type, pour extraire de la table de routage le mot stocké à l'adresse désignée par ledit mot du premier type, puis à délivrer ledit mot sur la sortie de ladite mémoire réinscriptible (17) de sorte qu'il alimente la seconde entrée du module intermédiaire (18) ou ledit étage de sortie (19) selon que ledit mot extrait est du premier ou du second type.

15. Dispositif selon l'une des revendications 1 à 14, **caractérisé en ce que** certaines au moins desdites mémoires tampon (11,20) sont de type « FIFO ».

16. Dispositif selon l'une des revendications 1 à 15, **caractérisé en ce qu**'il comprend ledit étage de transport de données (2).

17. Dispositif d'aiguillage de paquets de données, **caractérisé en ce qu**'il comprend un dispositif de routage de données selon l'une des revendications précédentes.

18. Procédé de routage de données secondaires, associées à des données primaires de routage et à une adresse de stockage (FSA(s)), dans lequel i) on détermine à partir de ces données primaires et de données stockées dans au moins une table de routage des données tertiaires désignant au moins un port de sortie (7) et de nouvelles données primaires de routage, puis ii) on délivre lesdites données primaires et tertiaires déterminées, de sorte que certaines au moins desdites nouvelles données primaires soient combinées auxdites données secondaires stockées à ladite adresse de stockage (FSA(s)) puis transmises sur chaque port de sortie (7) désigné par lesdites données tertiaires,
**caractérisé en ce que** ladite détermination consiste i) à stocker dans n sous-mémoires, à des adresses choisies, n portions de chaque segment issu d'une décomposition de données reçues à router, dont des premiers segments, ii) à stocker à des endroits choisis les adresses choisies de stockage des premiers segment, puis, en fonction d'un critère choisi, à extraire desdites sous-mémoires, en parallèle, les portions stockées auxdites adresses de stockage contenues dans certains desdits endroits choisis pour délivrer, simultanément et en parallèle lesdites portions de segment, et iii) à orienter les portions appartenant à des segments différents vers au moins une table de routage, de manière à déterminer, à partir des données stockées dans ces tables de routage et d'une analyse portion après portion des différents segments, lesdites données primaires et tertiaires à associer aux différentes données secondaires à router.

19. Procédé selon la revendication 18, **caractérisé en ce que** l'on reçoit les données sous forme de segments de longueurs égales.

20. Procédé selon l'une des revendications 18 et 19, **caractérisé en ce que** le routage est de type L3F.

21. Procédé selon l'une des revendications 18 à 20, **caractérisé en ce que** l'on stocke lesdites adresses de stockage des premiers segments dans n registres.

22. Procédé selon l'une des revendications 18 à 21, **caractérisé en ce que** l'on prévoit autant de tables de routage que de sous-mémoires.

23. Procédé selon l'une des revendications 18 à 22, **caractérisé en ce que** chaque table de routage stocke sous forme de rangées des données primaires définissant des mots représentatifs de préfixes de routage, chaque portion de segment reçue permettant d'adresser l'un desdits mots d'une rangée.

24. Procédé selon la revendication 23, **caractérisé en ce que** chaque table de routage stocke des données primaires représentatives de mots de premier et second types.

25. Procédé selon la revendication 24, **caractérisé en ce que** pendant ladite détermination on extrait de la table de routage le mot stocké à l'adresse désignée par la portion de segment reçue, puis on délivre ledit mot de sorte qu'il alimente de nouveau ladite table de routage ou lesdits ports de sortie (7) selon que ledit mot extrait est du premier ou du second type, et chaque fois qu'un mot du premier type est délivré on extrait de ladite table un autre mot stocké à l'adresse désignée par ledit mot délivré jusqu'à obtention d'un mot d'un second type.

26. Utilisation du dispositif et du procédé selon l'une des revendications précédentes avec les standards de routage IP ou les protocoles sans connexion.

## Claims

1. A data routing device comprising i) a management module (9) adapted to receive primary routing data and a storage address (FSA(s)) of secondary data associated with said primary data and ii) a transfer module (12) adapted to determine from said data and from data stored in at least one routing table tertiary data designating at least one output port (7) of a data transport stage (2) and new primary routing data and to deliver the primary and tertiary data so determined to said transport stage (2) so that at least some of the said new primary data is combined with said secondary data stored at said storage address (FSA(s)) and then sent to each output port (7) designated by said tertiary data,
which device is **characterized in that** said management module (9) includes a buffer memory (10) divided into n sub-memories each adapted to store at a selected address a portion of each segment resulting from decomposition of data packets received and to be routed, including a first segment, and to deliver one of the portions that they store simultaneously on demand at n first parallel outputs,
and **in that** the transfer module (12) is adapted i) to receive from the management module (9) the selected storage addresses of the first segments of the packets to be routed, ii) to deliver some of the storage addresses to the management module as a function of a selected criterion in order to receive in return at the first parallel outputs the segment portions stored at the storage addresses, and iii) to direct the portions belonging to different segments to at least one routing table (15-1, ...15-j) so as to determine said primary and tertiary data associated with the secondary data to be routed from data stored in said routing tables and a portion by portion analysis of the various segments.

2. A device according to claim 1, **characterized in that** said transfer module (12) includes at least two routing tables (15) to enable parallel analysis of different segments.

3. A device according to either claim 1 or claim 2, **characterized in that** said management module (9) is adapted to receive data in the form of segments of equal length.

4. A device according to any one of claims 1 to 3, **characterized in that** said management module (9) and said transfer module (12) constitute an L3F routing stage (8).

5. A device according to any one of claims 1 to 4, **characterized in that** the transfer module (12) includes an input stage (13) provided with i) n registers (RR) adapted to store the storage addresses of n first segments, ii) an input buffer memory (11) adapted to receive said selected addresses of said first segments from the management module (9) to feed said registers (RR), and iii) a handling module (14) having i) n inputs respectively fed with n segment portions by the n first parallel outputs and ii) at least one second output (16) adapted to deliver said directed portions belonging to different segments.

6. A device according to claim 5, **characterized in that** the handling module (14) has n inputs and n second outputs.

7. A device according to any one of claims 2 to 5 in combination with claim 6, **characterized in that** said transfer module (12) includes from 1 to n routing units (15) fed with different segment portions by said second outputs (16) and each including a rewritable memory (17) storing one of the routing tables and adapted to determine in parallel said primary and tertiary data associated with the secondary data to be routed.

8. A device according to any one of claims 1 to 7, **characterized in that** each routing table stores primary data defining words representative of routing prefixes in the form of rows and each segment portion received is used to address one of said words of a row.

9. A device according to claim 8, **characterized in that** each routing table stores primary data representative of words of first and second types.

10. A device according to any one of claims 1 to 9, **characterized in that** said transfer module (12) includes an output stage (19) with the same number of output buffer memories (20) as there are output ports (7) of the transport stage (2) and adapted to receive said tertiary data, said new primary data, and said storage address (FSA(s)) of the routing units (15).

11. A device according to any one of claims 1 to 9, **characterized in that** said transfer module (12) includes an output stage (19) provided with the same number of output buffer memory groups (20) as there are output ports (7) of the transport stage (2), each group being adapted to receive said tertiary data, said new primary data, and said storage address (FSA(s)) of the routing units (15).

12. A device according to claim 11, **characterized in that** the output buffer memories (20) of a group are associated with different qualities of service.

13. A device according to any one of claims 10 to 12, **characterized in that** said output stage (19) includes a multiplexer (21) fed by the routing units (15) and feeding said output buffer memories (20).

14. A device according to claim 9 in combination with any one of claims 10 to 13, **characterized in that** each routing unit (15) i) includes an intermediate module (18) including an output coupled to the rewritable memory (17) and first and second inputs respectively fed by one of the second outputs of the input stage (13) and by the output of said rewritable memory (17) and ii) is adapted to extract from the routing table the word stored at the address designated by the received portion and then to deliver said word to the output of said rewritable memory so that it feeds the second input of the intermediate module (18) or said output stage (19), according to whether said word extracted is of the first or of the second type, and **in that** said intermediate module (18) is adapted, on receiving data representative of a word of the first type, to extract from the routing table the word stored at the address designated by said word of the first type and then to deliver said word to the output of said rewritable memory (17) so that it feeds the second input of the intermediate module (18) or said output stage (19), according to whether said extracted word is of the first type or of the second type.

15. A device according to any one of claims 1 to 14, **characterized in that** at least some of said buffer memories (11, 20) are FIFO memories.

16. A device according to any one of claims 1 to 15, **characterized in that** it includes said data transport stage (2).

17. A data packet handling device, **characterized in that** it includes a data routing device according to any preceding claim.

18. A method of routing secondary data associated with primary routing data and a storage address (FSA(s)), in which method i) tertiary data designating at least one output port (7) and new primary routing data is determined from said primary data and from data stored in at least one routing table, after which ii) said primary and tertiary data so determined is delivered so that at least some of said new primary data is combined with said secondary data stored at said storage address (FSA(s)) and then sent to each output port (7) designated by said tertiary data,
which method is **characterized in that** said tertiary data designating at least one output port (7) and new primary routing data is determined by i) storing in n sub-memories, at selected addresses, n portions of each segment resulting from subdivison of the data received and to be routed, including first segments, ii) storing at selected locations the selected storage addresses of the first segments and then, as a function of a selected criterion, extracting from said sub-memories, in parallel, the portions stored at said storage addresses contained in some of the selected locations so as to deliver said segment portions simultaneously and in parallel, and iii) directing the portions belonging to different segments to at least one routing table so as to determine said primary and tertiary data to be associated with the secondary data to be routed from data stored in said routing tables and a portion by portion analysis of the various segments.

19. A method according to claim 18, **characterized in that** the data is received in the form of segments of equal length.

20. A method according to claim 18 or claim 19, **characterized in that** the routing is L3F routing.

21. A method according to any one of claims 18 to 20, **characterized in that** said storage addresses of the first segments are stored in n registers.

22. A method according to any one of claims 18 to 21, **characterized in that** the number of routing tables is the same as the number of sub-memories.

23. A method according to any one of claims 18 to 22, **characterized in that** each routing table stores primary data defining words representative of routing prefixes in the form of rows and each received segment portion is used to address one of said words of a row.

24. A method according to claim 23, **characterized in that** each routing table stores primary data representative of words of first and second types.

25. A method according to claim 24, **characterized in that** during said determination the word stored at the address designated by the received segment portion is extracted from the routing table and is then delivered so that it feeds said routing table again or said output ports (7), according to whether the extracted word is of the first type or of the second type, and each time that a word of the first type is delivered another word stored at the address designated by said word delivered is extracted from said table, and so on until a word of the second type is obtained.

26. Use of the device and the method according to any preceding claim with the Internet Protocol (IP) routing standards or connectionless protocols.

## Patentansprüche

1. Datenroutinggerät, bestehend aus i) einem Verwaltungsmodul (9), das entsprechend ausgeführt ist, um primäre Routingdaten und eine Speicheradresse (FSA(s)) für die den genannten Primärdaten zugeordneten Sekundärdaten zu empfangen, und ii) einem Übertragungsmodul (12), das entsprechend ausgeführt ist, um ausgehend von diesen Daten und von den in mindestens einer Routingtabelle gespeicherten Daten die Tertiärdaten (und neue Routing-Primärdaten) zu ermitteln, wobei die Tertiärdaten mindestens einen Ausgangsanschluss (7) einer Stufe (2) für die Datenübertragung bezeichnen, und um die ermittelten Primär- und Tertiärdaten an die genannte Übertragungsstufe (2) zu übermitteln, so dass zumindest bestimmte der genannten neuen Primärdaten mit den genannten Sekundärdaten, die unter der genannten Speicheradresse (FSA(s)) gespeichert sind, kombiniert und anschließend an jeden Ausgangsanschluss (7) übertragen werden, der von den genannten Tertiärdaten bezeichnet wird,
**dadurch gekennzeichnet, dass** das genannte Verwaltungsmodul (9) einen Pufferspeicher (10) umfasst, der in n Unterspeicher unterteilt ist, die jeweils in der Lage sind, einen Anteil jedes Segments, der aus der Zerlegung von empfangenen, zu vermittelnden Datenpaketen resultiert, d.h. das erste Segment unter einer gewählten Adresse zu speichern, und gleichzeitig auf einen Befehl hin über n erste parallele Ausgänge einen der gespeicherten Anteile zu übertragen,
sowie dadurch, dass das Übertragungsmodul (12) entsprechend ausgeführt ist, um i) vom Verwaltungsmodul (9) die gewählten Speicheradressen der ersten Segmente der zu vermittelnde Pakete zu empfangen und ii) bestimmte dieser Speicheradressen in Abhängigkeit von einem ausgewählten Kriterium an das Verwaltungsmodul zu übertragen, um im Gegenzug an den ersten parallelen Ausgängen die unter den genannten Speicheradressen gespeicherten Segmentanteile zu empfangen, und iii) die Anteile, die zu verschiedenen Segmenten gehören, an mindestens eine Routingtabelle (15-1, ... 15-j) weiterzuleiten, um ausgehend von den in diesen Routingtabellen gespeicherten Daten und einer abschnittsweisen Analyse der verschiedenen Segmente die genannten Primär- und Tertiärdaten zu ermitteln, die den verschiedenen zu vermittelnden Sekundärdaten zugeordnet sind.

2. Gerät gemäß Anspruch 1, **dadurch gekennzeichnet, dass** das genannte Übertragungsmodul (12) mindestens zwei Routingtabellen (15) umfasst, um die parallele Analyse der verschiedenen Segmente zu gewährleisten.

3. Gerät gemäß einem der Ansprüche 1 und 2, **dadurch gekennzeichnet, dass** das genannte Verwaltungsmodul (9) entsprechend ausgeführt ist, um die Daten in Form von Segmenten mit gleicher Länge zu empfangen.

4. Gerät gemäß einem der Ansprüche 1 bis 3, **dadurch gekennzeichnet, dass** das genannte Verwaltungsmodul (9) und das genannte Übertragungsmodul (12) eine Routingstufe (8) vom Typ L3F darstellen.

5. Gerät gemäß einem der Ansprüche 1 bis 4, **dadurch gekennzeichnet, dass** das Übertragungsmodul (12) eine Eingangsstufe (13) umfasst, die i) mit n Registern (RR), die in der Lage sind, die Speicheradressen von n ersten Segmenten zu speichern, ii) mit einem Eingangspufferspeicher (11), der in der Lage ist, die genannten gewählten Adressen der genannten ersten Segmente vom Verwaltungsmodul (9) zu empfangen, um diese an die genannten Register (RR) zu übertragen, und iii) mit einem Vermittlungsmodul (14) ausgerüstet ist, das i) n Eingänge, die jeweils n Segmentanteile von den n ersten parallelen Ausgängen empfangen, und ii) mindestens einen zweiten Ausgang (16) umfasst, der in der Lage ist, die genannten, übermittelten Anteile, die zu verschiedenen Segmenten gehören, weiterzuleiten.

6. Gerät gemäß Anspruch 5, **dadurch gekennzeichnet, dass** das Vermittlungsmodul (14) n Eingänge und n zweite Ausgänge umfasst.

7. Gerät gemäß einem der Ansprüche 2 bis 5 in Kombination mit Anspruch 6, **dadurch gekennzeichnet, dass** das genannte Übertragungsmodul (12) eine Anzahl an Routingeinheiten (15) umfasst, die zwischen 1 und n beträgt, wobei die genannten Routingeinheiten verschiedene Segmentanteile von den genannten zweiten Ausgängen (16) empfangen, jeweils einen wiederbeschreibbaren Speicher (17) umfassen, in dem eine der Routingtabellen gespeichert ist, und in der Lage sind, die genannten, den verschiedenen zu vermittelnden Sekundärdaten zugeordneten Primär- und Tertiärdaten parallel zu ermitteln.

8. Gerät gemäß einem der Ansprüche 1 bis 7, **dadurch gekennzeichnet, dass** die Primärdaten, die die Worte definieren, die für die Routingpräfixe repräsentativ sind, in jeder Routingtabelle in Form von Zeilen gespeichert sind, wobei jeder empfangene Segmentanteil die Möglichkeit bietet, eines der genannten Worte einer Zeile zu adressieren.

9. Gerät gemäß Anspruch 8, **dadurch gekennzeichnet, dass** in jeder Routingtabelle Primärdaten gespeichert sind, die für die Worte ersten und zweiten Typs repräsentativ sind.

10. Gerät gemäß einem der Ansprüche 1 bis 9, **dadurch gekennzeichnet, dass** das genannte Übertragungsmodul (12) eine Ausgangsstufe (19) umfasst, die mit Ausgangspufferspeichern (20) ausgerüstet ist, deren Anzahl der Anzahl an Ausgangsanschlüssen (7) der Übertragungsstufe (2) entspricht und die in der Lage sind, die genannten Tertiärdaten, die genannten neuen Primärdaten und die genannte Speicheradresse (FSA(s)) der Routingeinheiten (15) zu empfangen.

11. Gerät gemäß einem der Ansprüche 1 bis 9, **dadurch gekennzeichnet, dass** das genannte Übertragungsmodul (12) eine Ausgangsstufe (19) umfasst, die mit Gruppen von Pufferspeichern (20) ausgerüstet ist, deren Anzahl der Anzahl an Ausgangsanschlüssen (7) der Übertragungsstufe (2) entspricht, wobei jede Gruppe in der Lage ist, die genannten Tertiärdaten, die genannten neuen Primärdaten und die genannte Speicheradresse (FSA(s)) der Routingeinheiten (15) zu empfangen.

12. Gerät gemäß Anspruch 11, **dadurch gekennzeichnet, dass** die Ausgangspufferspeicher (20) einer Gruppe unterschiedlichen Dienstgüten zugeordnet sind.

13. Gerät gemäß einem der Ansprüche 10 bis 12, **dadurch gekennzeichnet, dass** die genannte Ausgangsstufe (19) einen Multiplexer (21) umfasst, der Daten von den Routingeinheiten (15) empfängt und diese an die genannten Ausgangspufferspeicher (20) überträgt.

14. Gerät gemäß Anspruch 9 in Kombination mit einem der Ansprüche 10 bis 13, **dadurch gekennzeichnet, dass** jede Routingeinheit (15) i) ein Zwischenmodul (18), das einen mit dem wiederbeschreibbaren Speicher (17) verbundenen Ausgang und erste und zweite Eingänge umfasst, die jeweils Daten von einem der zweiten Ausgänge der Eingangsstufe (13) und von dem Ausgang des genannten wiederbeschreibbaren Speichers (17) empfangen, umfasst und ii) entsprechend ausgeführt ist, um das unter der von dem empfangenen Anteil bezeichneten Adresse gespeicherte Wort aus der Routingtabelle auszulesen und das genannte Wort anschließend an den Ausgang des genannten wiederbeschreibbaren Speichers zu übertragen, so dass die Daten an den zweiten Eingang des Zwischenmoduls (18) oder die genannte Ausgangsstufe (19) übertragen werden, je nachdem, ob das genannte ausgelesene Wort ersten oder zweiten Typs ist, sowie dadurch, dass das genannte Zwischenmodul (18) entsprechend ausgeführt ist, um beim Empfang von Daten, die für ein Wort ersten Typs repräsentativ sind, das unter der durch das genannte Wort ersten Typs bezeichneten Adresse gespeicherte Wort aus der Routingtabelle auszulesen, das genannte Wort anschließend an den genannten Ausgang des genannten wiederbeschreibbaren Speichers (17) zu übertragen, so dass es an den zweiten Eingang des Zwischenmoduls (18) oder an die genannte Ausgangsstufe (19) weitergeleitet wird, je nachdem, ob das genannte ausgelesene Wort ersten oder zweiten Typs ist.

15. Gerät gemäß einem der Ansprüche 1 bis 14, **dadurch gekennzeichnet, dass** zumindest bestimmte der genannten Pufferspeicher (11, 20) vom Typ "FIFO" sind.

16. Gerät gemäß einem der Ansprüche 1 bis 15, **dadurch gekennzeichnet, dass** es die genannte Datenübertragungsstufe (2) umfasst.

17. Gerät zur Vermittlung von Datenpaketen, **dadurch gekennzeichnet, dass** es ein Datenroutinggerät gemäß einem der vorgenannten Ansprüche umfasst.

18. Verfahren zum Routing von Sekundärdaten, die primären Routingdaten und einer Speicheradresse (FSA(s)) zugeordnet sind, in dem man i) ausgehend von diesen Primärdaten und von Daten, die in mindestens einer Routingtabelle gespeichert sind, Tertiärdaten, die mindestens einen Ausgangsanschluss (7) bezeichnen, sowie neue primäre Routingdaten ermittelt, anschließend ii) die genannten ermittelten Primär- und Tertiärdaten weiterleitet, so dass zumindest bestimmte der genannten neuen Primärdaten mit den genannten Sekundärdaten, die unter der genannten Speicheradresse (FSA(s)) gespeichert sind, kombiniert und anschließend an jeden Ausgangsanschluss (7), der von den genannten Tertiärdaten bezeichnet wird, übertragen werden,
**dadurch gekennzeichnet, dass** die genannte Ermittlung darin besteht, i) in n Unterspeichern unter gewählten Adressen n Anteile jedes Segments, das sich aus einer Zerlegung von empfangenen, zu vermittelnden Daten ergibt, d.h. die ersten Segmente zu speichern, ii) an gewählten Stellen die gewählten Speicheradressen der ersten Segmente zu speichern und anschließend in Abhängigkeit von einem gewählten Kriterium aus den genannten Unterspeichern die Anteile parallel auszulesen, die unter den genannten Speicheradressen gespeichert sind, die an bestimmten der genannten gewählten Stellen gespeichert sind, um die genannten Segmentanteile gleichzeitig und parallel zu übertragen, und iii) um die Anteile, die zu verschiedenen Segmenten gehören, an mindestens eine Routingtabelle zu übertragen, um ausgehend von den in diesen Routingtabellen gespeicherten Daten und einer abschnittsweisen Analyse der verschiedenen Segmente die genannten Primär- und Tertiärdaten zu ermitteln, die den verschiedenen zu vermittelnden Sekundärdaten zugeordnet werden sollen.

19. Verfahren gemäß Anspruch 18, **dadurch gekennzeichnet, dass** die Daten in Form von Segmenten mit gleicher Länge empfangen werden.

20. Verfahren gemäß einem der Ansprüche 18 und 19, **dadurch gekennzeichnet, dass** das Routing vom Typ L3F ist.

21. Verfahren gemäß einem der Ansprüche 18 bis 20, **dadurch gekennzeichnet, dass** die genannten Speicheradressen der ersten Segmente in n Registern gespeichert werden.

22. Verfahren gemäß einem der Ansprüche 18 bis 21, **dadurch gekennzeichnet, dass** ebenso viele Routingtabellen wie Unterspeicher vorgesehen werden.

23. Verfahren gemäß einem der Ansprüche 18 bis 22, **dadurch gekennzeichnet, dass** die Primärdaten, die die Worte definieren, die für die Routingpräfixe repräsentativ sind, in jeder Routingtabelle in Form von Zeilen gespeichert sind, wobei jeder empfangene Segmentanteil die Möglichkeit bietet, eines der genannten Worte einer Zeile zu adressieren.

24. Verfahren gemäß Anspruch 23, **dadurch gekennzeichnet, dass** in jeder Routingtabelle Primärdaten gespeichert sind, die für Worte ersten und zweiten Typs repräsentativ sind.

25. Verfahren gemäß Anspruch 24, **dadurch gekennzeichnet, dass** während der genannten Ermittlung das unter der von dem empfangenen Segmentanteil bezeichneten Adresse gespeicherte Wort aus der Routingtabelle ausgelesen wird, das genannte Wort anschließend übertragen wird, so dass es an die genannte neue Routingtabelle oder an die genannten Ausgangsanschlüsse (7) weitergeleitet wird, je nachdem, ob das genannte ausgelesene Wort ersten oder zweiten Typs ist, und jedes Mal, wenn ein Wort ersten Typs übertragen wird, wird aus der genannten Tabelle ein weiteres, unter der von dem genannten übertragenen Wort bezeichneten Adresse gespeichertes Wort ausgelesen, bis ein Wort zweiten Typs ermittelt wird.

26. Einsatz des Geräts und des Verfahrens gemäß einem der vorgenannten Ansprüche mit IP-Routingstandards oder verbindungslosen Protokollen.
